# EUROPÄISCHE PATENTSCHRIFT

(11) **EP 3 225 141 B1**
(45) Veröffentlichungstag und Bekanntmachung des Hinweises auf die Patenterteilung: **14.09.2022**
(21) Anmeldenummer: 17163767.1
(22) Anmeldetag: 30.03.2017
(51) Int. Cl.: A47J 31/00, A47J 31/52, A47J 31/36

(54) **KAFFEEMASCHINE SOWIE BETRIEBSVERFAHREN**
COFFEE MACHINE AND METHOD OF OPERATION
MACHINE À CAFÉ ET PROCÉDÉ DE FONCTIONNEMENT

(30) Priorität: 31.03.2016 DE 102016105862
(43) Veröffentlichungstag der Anmeldung: 04.10.2017
(73) Patentinhaber: Eugster/Frismag AG, 8580 Amriswil (CH)
(72) Erfinder: Reinhart, Stefan, 8581 Schocherswil (CH); Riessbeck, Wolfgang, 8597 Landschlacht (CH); Sanli, Hakan, 78467 Konstanz (DE)
(74) Vertreter: Patent- und Rechtsanwälte Behrmann Wagner PartG mbB

(56) Entgegenhaltungen:
- WO-A1-2013/037076

## Beschreibung

Die Erfindung betrifft ein Verfahren gemäß dem Oberbegriff des Anspruchs 1 zum Betreiben einer Kaffeemaschine, insbesondere eines eine integrierte Kaffeemühle aufweisenden Kaffeevollautomaten, mit einer in einem Brühzylinder ausgebildeten Brühkammer, die axial von einem in den Brühzylinder verschiebbar angeordneten Kolben begrenzt ist, wobei bevorzugt der Kolben durch Beaufschlagen der mit Kaffeemehl gefüllten Brühkammer mit Brühwasser über eine in die Brühkammer einmündende Zuleitung entgegen der Federkraft einer Feder unter Vergrößerung eines Brühkammervolumens verstellt wird, und wobei in einer Durchfeuchtungsphase das Kaffeemehl durch Einleiten von Brühwasser in die Brühkammer durchfeuchtet und bevorzugt verwirbelt wird und in einer Kaffeebezugsphase Kaffee durch einen benachbart zu einem am Kolben angeordneten Sieb aufgebauten Filterkuchen aus dem Kaffeemehl sowie durch das Sieb hindurch in Richtung Auslass strömt, und wobei zum Versorgen der Brühkammer mit Brühwasser eine über eine Steuereinheit in Abhängigkeit eines Sensorsignals in einem Wasserpfad angeordneten Durchflussmessers ansteuerbare Förderpumpe vorgesehen ist, mit der Wasser über den Wasserpfad durch eine Heizeinrichtung hindurch in die Brühkammer gefördert wird. Alternativ ist der Kolben aktiv mittels eines bevorzugt elektromotorischen Antriebs unter Vergrößerung des Brühkammervolumens im Brühzylinder verstellbar.

Ferner betrifft die Erfindung eine Kaffeemaschine gemäß dem Oberbegriff des Anspruchs 14, die ausgebildet ist zur Durchführung eines erfindungsgemäßen Verfahrens. Wesentlich ist, dass die Kaffeemaschine eine in einem Brühzylinder ausgebildete Brühkammer aufweist, die axial von einem in dem Brühzylinder verschiebbar angeordneten Kolben begrenzt ist, wobei der Kolben, vorzugsweise durch Beaufschlagen der mit Kaffeemehl befüllbaren Brühkammer mit Brühwasser über eine in die Brühkammer einmündende Zuleitung entgegen der Federkraft mindestens einer Feder oder alternativ mittels eines, bevorzugt elektromotorischen Antriebs, (jeweils) unter Vergrößerung eines Brühkammervolumens verstellbar ist. Die Ansteuerung einer Förderpumpe zur Versorgung der Brühkammer mit Brühwasser erfolgt über eine Förderpumpe, die Wasser durch einen Wasserpfad, bevorzugt von einem Festwasseranschluss oder alternativ einem Wasserbehälter durch eine Heizeinrichtung und einen Durchflussmesser hindurch in die Brühkammer fördert. Die Steuereinheit steuert die Förderpumpe dabei in Abhängigkeit eines Sensorsignals des Durchflussmessers an.

Eine Kaffeemaschine mit einer wie zuvor beschrieben ausgebildeten, volumenveränderlichen Brühkammer, die axial von einem entgegen der Federkraft einer Feder verstellbaren Kolben begrenzt wird, der bei Brühwasserbeaufschlagung der Brühkammer entgegen der Federkraft der Feder unter Vergrößerung des Brühkammervolumens axial verstellt wird, ist in der EP 1 217 925 B1 der Anmelderin beschrieben. In der Praxis wird die bekannte Kaffeemaschine so betrieben, dass in einer Durchfeuchtungsphase Brühwasser in die Brühkammer eingeleitet wird. Diese Durchfeuchtungsphase wird in der Praxis als Vorbrühen bezeichnet. Während dieser Durchfeuchtungsphase steigt der Brühwasserdruck in der Brühkammer an, da die Brühkammer ausgangsseitig von einem Cremaventil verschlossen ist. Auf die Durchfeuchtungsphase folgt eine Förderpause, woraufhin dann der Kaffeebezug mit einem Volumenstrom erfolgt. Nach Beendigung dieser Kaffeebezugsphase wird der Filterkuchen ausgepresst und der so vorgetrocknete Trester ausgeworfen.

Es besteht das Bedürfnis, wie zuvor beschrieben ausgebildete Kaffeemaschinen so zu betreiben, dass ohne die Notwendigkeit der Variation einer Vielzahl von Parametern, wie dem Mahlgrad des Kaffeemehls, der Brühtemperatur, die Menge der Einwaage an Kaffeemehl usw., der Geschmack des Kaffeeproduktes ohne großen technischen Aufwand variierbar ist.

Aus der WO 01/12039 A2 ist ein Verfahren zur Steuerung einer Kaffeemaschine zur Herstellung von Filterkaffee bekannt, wobei die Kaffeemehl-und Wassermenge variiert wird.

Die DE 10 2009 034 945 A1 offenbart eine Herstellung von Espresso und amerikanischem Kaffee durch einen Kaffeevollautomaten, welcher im Rahmen einer intermittierenden Aktivierung einer Förderpumpe die Wassermenge variiert.

Die EP 2 279 683 A1 schlägt vor, bei einem Kaffeevollautomaten als Ansteuerparameter den Druck, die Temperatur und den Mahlgrad zu nutzen. Die EP 2 392 239 B1 stellt darauf ab, zur Geschmacksvariation als Ansteuerparameter zumindest den Anpressdruck des Kaffeemehls und mindestens einen weiteren der folgenden Parameter zu variieren: den Mahlgrad des Kaffeemehls, die Brühtemperatur, die Menge der Einwaage an Kaffeemehl, die Menge und Dauer der Wasserzufuhr über einen Bypass, Umfang und Dauer einer Preinfusion.

Sämtliche vorgenannten Druckschriften befassen sich nicht mit der Geschmacksvariation bei einer Kaffeemaschine, die eine wie in der EP 1 217 925 B1 beschriebene Brüheinheit mit entgegen einer Federkraft verstellbaren Brühkammerkolben aufweist.

Die WO 2013/037076 A1 offenbart ein Verfahren gemäss Oberbegriff des Anspruchs 1 und eine Kaffeemaschine gemäss Oberbegriff des Anspruchs 14. Ausgehend von der vorgenannten Stand der Technik liegt der Erfindung die Aufgabe zugrunde, ein hinsichtlich der Geschmacksvarianz optimiertes Verfahren zum Betreiben einer Kaffeemaschine anzugeben, deren Brühkammer durch einen, vorzugsweise (jedoch nicht zwingend) entgegen der Federkraft einer Feder, verstellbaren Brühkammerkolben volumenveränderlich ist. Ferner besteht die Aufgabe darin, eine entsprechend verbesserte Kaffeemaschine zur Ausführung eines solchen Verfahrens anzugeben.

Diese Aufgabe wird hinsichtlich des Verfahrens mit den Merkmalen des Anspruchs 1 gelöst.

Hinsichtlich der Kaffeemaschine wird die Aufgabe mit den Merkmalen des Anspruchs 14 gelöst.

Vorteilhafte Weiterbildungen der Erfindung sind in den Unteransprüchen angeben.

Zur Meidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, zur Geschmacksbeeinflussung bzw. -parametrisierung des mittels des erfindungsgemäßen Verfahrens bzw. der erfindungsgemäßen Kaffeemaschine herstellbaren Kaffeeproduktes die auf die Durchfeuchtungsphase folgende Kaffeebezugsphase bei einer eine durch Verstellen eines Brühkolbens, bevorzugt entgegen einer Federkraft, volumenveränderliche Brühkammer aufweisenden Kaffeemaschine in mehrere Teilphasen zu unterteilen, wobei sich mindestens zwei der Teilphasen aufgrund einer voneinander unterschiedlichen Soll-Brühwasservolumenstromvorgabe im Hinblick auf die Größe des aus der die Sollvorgabe umsetzenden Regelung resultierenden mittleren Brühwasservolumenstroms (flow), d.h. der Brühwassergeschwindigkeit, mit der die Brühkammer mit Brühwasser versorgt wird, unterscheiden. Anders ausgedrückt wird die Förderpumpe in mindestens zwei von mehreren Teilphasen auf einen unterschiedlichen Soll-Brühwasservolumenstrom geregelt, wobei im Rahmen der Regelung als Ist-Wert das Sensorsignal des Durchflussmessers (flow meter) berücksichtigt wird. Aufgrund des erfindungsgemäßen Betriebsverfahrens ist es auf überraschend einfache Weise möglich, Geschmacksparameter, bevorzugt allein, durch die Wahl unterschiedlicher mittlerer Brühwasservolumenströme in unterschiedlichen Zeitabschnitten (Teilphasen) während der Kaffeebezugsphase zu beeinflussen, ohne dass es notwendig ist, hierzu den Mahlgrad des Kaffeemehls, den Anpressdruck des Kaffeemehls in der Brühkammer oder die Einwaage des Kaffeemehls zu variieren. Eine Beeinflussung solcher Parameter kann bei Bedarf zusätzlich erfolgen, ist jedoch zur Realisierung des erfindungsgemäßen Grundgedankens nicht notwendig.

Darüber hinaus ermöglicht es das erfindungsgemäße Verfahren dann, weil durch eine entsprechende Ausgestaltung bzw. Parametrisierung der Steuereinheit in Verbindung mit signalleitend mit der Steuereinheit verbundenen Eingabemitteln zwischen mindestens zwei unterschiedlichen Brühprofilen ausgewählt werden kann, die sich im Hinblick auf die Ausgestaltung ihrer jeweiligen Kaffeebezugsphase unterscheiden, bei ansonsten gleichen Parametern, wie gleicher Kaffeesorte, gleichem Mahlgrad, gleicher Kaffeeeinwaage usw. unterschiedliche Kaffeeprodukte mit einer großen (signifikanten) geschmacklichen Spreizung herzustellen. Mindestens zwei Teilphasen der Kaffeebezugsphase der unterschiedlichen Brühprofile, zwischen denen nutzerseitig auswählbar ist, unterscheiden sich dabei hinsichtlich ihrer Parametrisierung (Soll-Brühwasservolumenstrom und/oder der Teilzeitphasendauer und/oder Soll-Brühwassermenge) und/oder die Teilphasen der unterschiedlichen Brühprofile weisen eine voneinander unterschiedliche Reihenfolge bzw. Abfolge auf.

Es existieren also im Hinblick auf die Realisierung der Unterschiede zwischen mindestens zwei Brühprofilen unterschiedliche, alternativ oder kumulativ anwendbare Möglichkeiten. Bevorzugt differieren die mindestens zwei auswählbaren, unterschiedlichen Brühprofile durch entsprechende Sollvorgaben in der Steuereinheit dahingehend, dass sich zwei, bevorzugt an der gleichen Abfolgeposition der Teilphasen oder an unterschiedlichen Abfolgepositionen der Teilphasen eingeordneten, Teilphasen der unterschiedlichen Brühprofile hinsichtlich ihres mittleren Brühwasservolumenstroms unterscheiden. Anders ausgedrückt wird die Brühkammer in mindestens einer Teilphase der unterschiedlichen Brühprofile mit einem mittleren Brühwasservolumenstrom versorgt, der von allen Brühwasservolumenströmen der Teilphasen des anderen Brühprofils unterschiedlich ist. Noch anders ausgedrückt weist ein erstes der Brühprofile eine von mindestens zwei Teilphasen mit einem mittleren Brühwasservolumenstrom von a ml/min auf, während keine der mehreren Teilphasen der Kaffeebezugsphase eines zweiten Brühprofils eine Teilphase mit einem Brühwasservolumenstrom von a ml/min aufweist, d.h. es existiert im zweiten auswählbaren Brühprofil keine Teilphase mit einem identischen Brühwasservolumenstrom, im Beispiel also mit a ml/min. Zusätzlich oder alternativ können sich mindestens zwei auswählbare Brühprofile durch entsprechende Sollvorgabe bzw. Parametrisierung dahingehend unterscheiden, dass die Reihenfolge von Teilphasen des jeweiligen Brühprofils mit voneinander unterschiedlichen Brühwasservolumenströmen unterschiedlich, z.B. vertauscht ist. So hat beispielsweise eine vorhergehende, beispielsweise erste Teilphase eines ersten Brühprofils einen Brühwasservolumenstrom von a ml/min und eine spätere, beispielsweise darauffolgende bzw. zweite Teilphase des ersten Brühprofils von b ml/min, während bei dem zweiten Brühprofil die vorhergehende, beispielsweise erste Teilphase einen Brühwasservolumenstrom von b ml/min und eine spätere, beispielsweise zweite, oder dritte, usw. Teilphase einen Brühwasservolumenstrom von a ml/min oder c ml/min aufweist, wobei gilt a ≠ b ≠ c. Zusätzlich oder alternativ ist es möglich, dass sich mindestens zwei Teilphasen unterschiedlicher Brühprofile aufgrund entsprechender Sollvorgaben mit identischem oder voneinander unterschiedlichem Brühwasservolumenstrom hinsichtlich ihrer Teilphasenzeitdauer und/oder der in der jeweiligen Teilphase zu fördernden (absoluten) Brühwassermenge unterscheiden. Sämtliche vorgenannten einzeln oder in beliebiger Gruppierung realisierbaren Möglichkeiten zur Differenzierung von mindestens zwei Brühphasen zeichnen sich zumindest durch ein Brühprofil, vorzugsweise mehrere unterschiedliche Brühprofile aus, das bzw. die in ihrer (jeweiligen) Kaffeebezugsphase mindestens zwei Teilphasen mit voneinander unterschiedlichem Brühwasservolumenstrom aufweist/aufweisen.

Durch vorstehende Auswahlmöglichkeit zwischen mindestens zwei sich in Bezug auf die Ausgestaltung der Kaffeebezugsphase unterscheidenden Brühprofilen können mit Kaffeemehl der gleichen Kaffeesorte und auch ansonsten gleichen Voraussetzungen geschmacklich eine große Spreizung aufweisende unterschiedliche Kaffeeprodukte (mit derselben Kaffeemaschine) erzeugt werden.

Das erfindungsgemäße Verfahren bzw. die im Rahmen eines solchen Verfahrens zum Einsatz kommende Kaffeemaschine zeichnet sich dadurch aus, dass das Brühkammervolumen, bevorzugt während der Brühwasserbeaufschlagung zur Brühwasserbeaufschlagung der Brühkammer veränderlich ist bzw. verändert wird. Hierzu existieren zwei unterschiedliche Ausführungsvarianten. Die erste, besonders bevorzugte Ausführungsvariante sieht vor, dass der Kolben passiv, d.h. nur durch die Brühwasserbeaufschlagung der Brühkammer verstellbar ist und zwar entgegen der Federkraft einer Feder. Bei dieser Ausführungsvariante ist dem Kolben für dessen Verstellbewegung bevorzugt kein (aktiver) Antrieb zugeordnet. Bei einer alternativen Ausführungsvariante wird das Brühkammervolumen vor und/oder während der Brühwasserbeaufschlagung der Brühkammer aktiv verändert und zwar durch Verstellen des Kolbens über einen, insbesondere elektromotorischen Antrieb. Die Ansteuerung erfolgt bevorzugt über einen Inkrementalgeber. Bei der zweiten Variante ist es beispielsweise möglich und bevorzugt den Kolben zunächst gegen das in der Brühkammer befindliche Kaffeemehl (Kaffeepulver) zu pressen, insbesondere um einen definierten Anpressdruck zu erreichen, wobei dann, entweder noch vor der Brühwassereinleitung und/oder während der Brühwassereinleitung die Brühkammer bzw. den Brühraum durch Verstellen bzw. Zurückverstellen des Kolbens mittels des aktiven Antriebs wieder (etwas) vergrößert wird.

Bei einer Kaffeemaschine mit einer wie zuvor beschrieben ausgebildeten, bevorzugt durch Brühwasserbeaufschlagung, oder alternativ durch aktives Verstellen des Kolbens mittels eines, insbesondere elektromotorischen Antriebs volumenveränderlichen Brühkammer wirken sich unterschiedliche mittlere Brühwasservolumenströme und damit Brühwasserströmungsgeschwindigkeit besonders stark auf einzelne Geschmacksparameter auf, so dass durch das erfindungsgemäße Verfahren eine besonders einfache und effiziente Möglichkeit zur Betonung bzw. Variation von Geschmacksparametern gegeben wird. Insbesondere dann, wenn zwischen mindestens zwei unterschiedlichen, wie zuvor beschrieben unterscheidenden Brühprofilen ausgewählt werden kann ist es, ohne weitere Parameter des Brühprozesses oder eines Mahlvorgangs variieren zu müssen möglich, eine große Geschmacksspreizung von zwei nacheinander mit den unterschiedlichen Brühprofilen gebrühten Kaffeeprodukten zu erzielen.

Mindestvoraussetzung des erfindungsgemäßen Verfahrens ist, wie erwähnt, die Unterteilung der Kaffeebezugsphase in mindestens zwei Teilphasen, wobei eine noch größere Varianz durch das Vorsehen von mehr als zwei Teilphasen, insbesondere zwei Teilphasen, drei Teilphasen, vier Teilphasen oder fünf Teilphasen oder noch mehr Teilphasen realisierbar ist, wobei sich mindestens zwei der Teilphasen erfindungsgemäß hinsichtlich der Größe des mittleren Brühwasservolumenstroms, d.h. der Strömungsgeschwindigkeit des Brühwassers unterscheiden, was durch unterschiedliche Soll-Brühwasservolumenstromvorgaben für eine entsprechende das Sensorsignal des Durchflussmessers als Ist-Größe einbeziehende Förderpumpenregelung durch die Steuereinheit umsetzbar ist. Besonders bevorzugt unterscheiden sich für den Fall des Vorsehens von mehr als zwei Teilphasen auch mehr als zwei Teilphasen, insbesondere sämtliche Teilphasen hinsichtlich der Größe des Brühwasservolumenstroms in den unterschiedlichen Teilphasen.

Bevorzugt beträgt eine Mindestbrühwassermenge, die in einer, bevorzugt jeder, Teilphase einer Kaffeebezugsphase zu fördern ist bzw. gefördert wird 1 ml, noch weiter bevorzugt 2 ml, ganz besonders bevorzugt 3 ml, weiter bevorzugt 4 ml, noch weiter bevorzugt 5 ml.

Das erfindungsgemäß eine in mehrere Teilphasen unterteilte Kaffeebezugsphase umfassende Betriebs- bzw. Brühverfahren beinhaltet eine zeitlich vor der Kaffeebezugsphase stattfindende Durchfeuchtungsphase, in der das Kaffeemehl durch Einleiten von Brühwasser erstmals durchfeuchtet und besonders bevorzugt dabei verwirbelt wird. Um eine vollständige Durchfeuchtung, insbesondere bei einer gleichzeitigen Verwirbelung des Kaffeemehls sicherzustellen ist es bevorzugt, wenn die Kaffeepulvermenge so auf das anfängliche Brühkammervolumen vor der Brühwassereinleitung abgestimmt ist, dass der Brühkolben keinen oder nur einen geringen Anpressdruck auf das Kaffeemehl ausübt und das trockene Kaffeemehl insbesondere noch nicht maximal mittels des Brühkolbens komprimiert ist - bevorzugt erfolgt die Komprimierung zu einem Filterkuchen erst durch die Brühwassereinleitung, insbesondere dadurch, dass noch während der Durchfeuchtungsphase nach einer anfänglichen geringen Strömungsgeschwindigkeit des Brühwassers bzw. einem geringen Brühwasservolumenstrom dieser, beispielsweise exponentiell oder linear erhöht wird, so dass sich durch diese stärker werdende Brühwasserbeaufschlagung die gewünschte Komprimierung bzw. Filterkuchenbildung ergibt.

Um eine gute Durchfeuchtung sowie eine Verwirbelung des Kaffeemehls in der Durchfeuchtungsphase zu erreichen ist es bevorzugt, wenn das Kaffeemehl mittels des Kolbens vor Beginn der Durchfeuchtungsphase, d.h. vor Beginn der Brühwasserzuleitung axial von dem Kolben nicht gepresst wird oder maximal mit einem Druck von weniger als 6bar, bevorzugt weniger als 5bar, weiter bevorzugt weniger als 4bar, noch weiter bevorzugt weniger als 2bar beaufschlagt wird.

Wie später noch erläutert werden wird ist es bevorzugt, wenn die vorerwähnte Durchfeuchtungsphase unmittelbar oder allenfalls mit einer geringen Förderpause der Kaffeebezugsphase vorausgeht. Besonders zweckmäßig ist es, wenn nach Beendigung der Kaffeebezugsphase, d.h. nach einer Beendigung des Betriebs der Förderpumpe, insbesondere im Zusammenhang mit dem Öffnen eines Drainageventils, der in der Brühkammer gebildete Filterkuchen (Tresterkuchen) ausgepresst und dann aus der Brühkammer ausgestoßen wird, insbesondere mit einem in Richtung des Brühkolbens verschiebbaren Brühkammerbodens bzw. Auspressers/Auswerfers.

Eine besonders große Beeinflussung von Geschmacksparametern wurde erreicht, indem sich die mittleren Brühwasservolumenströme in mindestens zwei der Teilphasen derselben Kaffeebezugsphase und/oder zur Gewinnung unterschiedlicher Kaffeeprodukte mit großer geschmacklicher Spreizung Kaffeebezugsphasen unterschiedlicher Brühprofile, um mindestens 10%, bevorzugt um mindestens 20%, noch weiter bevorzugt um mindestens 30%, ganz besonders bevorzugt um mindestens 50% unterscheiden. In absoluten Werten betrachtet ist es zweckmäßig, wenn mindestens zwei Teilprofile derselben oder unterschiedlicher Kaffeebezugsphasen hinsichtlich ihres Brühwasservolumenstroms um mindestens 10 ml/min, weiter bevorzugt mindestens 20 ml/min, noch weiter bevorzugt mindestens 30 ml/min unterscheiden.

Wie bereits angedeutet ist es bevorzugt, wenn die erste Teilphase der Kaffeebezugsphase ohne Brühwasserförderpause unmittelbar an die Durchfeuchtungsphase anschließt, oder für den Fall des Vorsehens einer Brühwasserförderpause diese kürzer zu bemessen als 1,5s, bevorzugt kürzer als 1,0s, noch weiter bevorzugt kürzer als 0,5s.

Um eine optimale Durchfeuchtung und bevorzugt Durchwirbelung des in der Brühkammer befindlichen Kaffeemehls zu erreichen ist es bevorzugt, wenn der Brühwasservolumenstrom, d.h. die Brühwasserfördergeschwindigkeit während der Durchfeuchtungsphase, bevorzugt nach einer langsamen Anfangsphase, beispielsweise linear oder noch weiter bevorzugt exponentiell zunimmt.

Im Hinblick auf eine noch weiter optimierte Verfahrensführung zur Geschmacksbeeinflussung ist es bevorzugt, wenn das zu Beginn in die Brühkammer einströmende Brühwasser nicht unmittelbar zu einem Auslass strömen kann, sondern dass erst Kaffee bis zum Auslass der Kaffeemaschine strömt, wenn ein Mindestbrühwasserdruck in der Brühkammer erreicht wird, wobei dieser Mindestbrühwasserdruck bevorzugt oberhalb 4 bar, ganz besonders bevorzugt zwischen 5 bar und 10 bar, ganz besonders bevorzugt zwischen 6 bar und 7 bar liegt. Eine solche Mindestbrühwasserdruckanforderung zu realisieren besteht beispielsweise darin, zwischen Auslass und Brühkammer ein Cremaventil anzuordnen, welches, insbesondere durch die Wahl einer entsprechenden Rückhaltefeder erst bei Erreichen eines vorgegebenen Mindestdrucks öffnet. Bevorzugt ist der Mindestbrühdruck so bemessen bzw. auf die Federkraft der mindestens einen auf den Brühkolben wirkenden Feder abgestimmt, dass der Brühkolben bereits maximal durch Brühwasserbeaufschlagung ausgelenkt ist, bevor der Mindestbrühdruck erreicht wird.

Im Hinblick auf den Zeitpunkt des Erreichens des Mindestbrühwasserdrucks gibt es unterschiedliche Möglichkeiten. So ist es beispielsweise realisierbar, durch eine entsprechende Ansteuerung der Förderpumpe über die Steuereinheit, dass der Mindestbrühwasserdruck noch in der Durchfeuchtungsphase erreicht wird, insbesondere am Ende der Durchfeuchtungsphase oder alternativ während der ersten Teilphase der Kaffeebezugsphase, beispielsweise zu Beginn, d.h. am Anfang der ersten Teilphase oder in deren Mitte.

In der Praxis ist ein bevorzugter konstanter Brühwasservolumenstrom pro Teilphase nur schwer realisierbar, da sich die Druckverhältnisse während der Extraktion ändern und die Förderpumpenleistung durch die Volumenstromregelung entsprechend nachjustiert bzw. geregelt werden muss. Es hat sich daher als vorteilhaft herausgestellt, wenn die Brühwasservolumenströme über ein Zeitintervall von mindestens 80%, bevorzugt mindestens 90% einer jeweiligen Teilphase maximal ± 20%, bevorzugt maximal ± 10% um einen arithmetischen Mittelwert dieses Zeitintervalls schwanken. Wie eingangs bereits angedeutet ist es bevorzugt, wenn sich mindestens zwei der Teilphasen einer Kaffeebezugsphase desselben Brühprofils nicht nur hinsichtlich des mittleren Brühwasservolumenstroms (Brühwasserfördergeschwindigkeit) unterscheiden, sondern wenn auch die Brühwassermenge, die pro Teilphase gefördert wird unterschiedlich ist, und sich bevorzugt um mindestens 20%, noch weiter bevorzugt um mindestens 30% unterscheidet. Für den bevorzugten Fall des Vorsehens unterschiedlicher Brühprofile ist es vorteilhaft, wenn sich mindestens zwei Teilphasen der Kaffeebezugsphase der unterschiedlichen Brühprofile hinsichtlich der geförderten Brühwassermenge unterscheiden. In absoluten Werten betrachtet ist es bevorzugt, wenn sich die Brühwassermenge in zwei Teilphasen mit unterschiedlichem mittlerem Brühwasservolumenstrom desselben Brühprofils und/oder unterschiedlicher Brühprofile um mindestens 5ml, noch weiter bevorzugt um mindestens 10ml unterscheidet.

Als besonders zweckmäßig hat es sich herausgestellt, dass die Steuereinheit derart ausgebildet ist, dass softwaremäßig ein Soll-Brühwasservolumenstrom pro Teilphase und/oder eine Soll-Brühwasserfördermenge pro Teilphase und/oder eine Soll-Teilphasenzeitdauer einstellbar und/oder vorgebbar ist. Anders ausgedrückt kann die Kaffeemaschine im Hinblick auf die Ausgestaltung der Teilphasen, bevorzugt softwaremäßig, parametrisiert werden, indem ein Soll-Brühwasservolumenstrom für mindestens zwei Teilphasen eingestellt bzw. vorgeben wird, auf den hin die Regelung der Förderpumpe erfolgt.

Zusätzlich oder alternativ kann die Dauer von mindestens zwei Teilphasen durch Vorgabe einer mittels des Durchflussmengenmessers zu bestimmenden Soll-Brühwasserfördermenge vorgegeben werden. Diese Parameter können nutzerseitig über eine entsprechende Menuführung von signalleitend mit der Steuereinheit verbundenen und/oder verbindbaren Eingabemitteln individualisiert bzw. variiert werden.

Im Hinblick auf die relative Zueinanderanordnung der Teilphasen ist es bevorzugt, wenn die Teilphasen ohne Förderpause, d.h. unmittelbar aufeinanderfolgen, d.h. ineinander übergehen. Auch ist es bevorzugt, wenn die Förderpumpe über die Dauer der Durchfeuchtungsphase und/oder der Kaffeebezugsphase durchgängig, d.h. nicht intermittierend betrieben wird, sondern dass diese kontinuierlich Brühwasser fördert.

Wie eingangs bereits erwähnt, ermöglicht es das erfindungsgemäße Verfahren Kaffeeprodukte unter ansonsten gleichen Ausgangsbedingungen aus derselben Kaffeesorte zu fertigen, wenn die Steuereinheit mindestens zwei unterschiedliche Brühprofile zur Verfügung stellt, die sich im Hinblick auf die Ausgestaltung und/oder relativ Zueinanderanordnung von Teilphasen unterscheiden. Insbesondere unterscheiden sich mindestens zwei, bevorzugt an der gleichen Stelle bzw. Reihenfolge angeordnete Teilphasen der unterschiedlichen Brühprofile hinsichtlich des mittleren Brühwasservolumenstroms, d.h. hinsichtlich der mittleren Fördergeschwindigkeit. Denkbar ist es auch, dass die zwei unterschiedlichen Brühprofile zwar hinsichtlich des mittleren Brühwasservolumenstroms, insbesondere hinsichtlich des zugeordneten Soll-Wertes identische Teilphasen umfassen, wobei jedoch die Reihenfolge von mindestens zwei Teilphasen bei den Brühprofilen unterschiedlich ist. Auch können die Teilphasenzeitdauer und/oder die zu fördernde Brühwassermenge (bei gleichem oder unterschiedlichem Brühwasservolumenstrom) von jeweils mindestens einer Teilphase der unterschiedlichen Brühprofile unterschiedlich sein. Bevorzugt umfasst zumindest eines der Brühprofile eine Teilphase in seiner Kaffeebezugsphase mit einem mittleren Brühwasservolumenstrom, der sich von sämtlichen Brühwasservolumenströmen der Teilphasen des anderen Brühprofils unterscheidet.

Die Erfindung führt auch auf eine Kaffeemaschine, die ausgebildet ist zur Durchführung des erfindungsgemäßen Verfahrens. Dabei ist die Steuereinheit derart ausgebildet, dass diese die Förderpumpe so ansteuert, dass diese die Brühkammer in mindestens zwei Teilphasen der mehreren Teilphasen umfassenden Kaffeebezugsphase mit Brühwasser in voneinander unterschiedlichen mittleren Brühwasservolumenströmen, d.h. mit voneinander unterschiedlichen Brühwasserfördergeschwindigkeiten versorgt. Dabei unterscheiden sich in der Steuereinheit bevorzugt die den tatsächlichen mittleren Brühwasservolumenströmen zugrundeliegenden Soll-Wertvorgaben.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Darstellung einer bevorzugten Brüheinheit einer nach dem Konzept der Erfindung ausgebildeten Kaffeemaschine,
- Fig. 2:: exemplarisch eine Volumenverlaufskurve eines beispielhaften, nach dem Konzept der Erfindung ausgebildeten Brühprofils, bei dem eine auf eine Durchfeuchtungsphase folgende Kaffeebezugsphase in drei Teilphasen mit unterschiedlichem Volumenstrom unterteilt ist,
- Fig. 3a:: ein Volumenstromprofil eines simulierten Standardbrühprofils, bei welchem die Kaffeebezugsphase nicht in Teilphasen unterteilt ist,
- Fig. 3b:: das Ergebnis einer sensorischen Untersuchung des aus einem Brühprofil gemäß Fig. 3a resultierenden Kaffees,
- Fig. 4a und 4b:: ein als Brühprofil 1 bezeichnetes Profil nach dem Konzept der Erfindung mit zugehöriger sensorischer Auswertung des resultierenden Kaffeeproduktes,
- Fig. 5a und 5b:: ein alternatives erfindungsgemäßes Brühprofil 2 mit zugehöriger sensorischer Auswertung,
- Fig. 6:: ein Diagramm, aus dem die in den Fig. 3a, 4a und 5a tabellarisch dargestellten Brühprofile graphisch dargestellt sind,
- Fig. 7:: ein Diagramm, welches die Extraktionsergebnisse gemäß den Fig. 3a, 4a und 5a hinsichtlich von Extraktionsparametern für unterschiedliche Kaffeesorten (Chicco d'Oro, India Delight und Real Vesuvio) vergleicht, und
- Fig. 8a-8c:: die aus den unterschiedlichen Brühvolumenstromvorgaben resultierenden Brühwasserdruckverläufe des Standardbrühprofils gemäß Fig. 3a, des Brühprofils 1 gemäß Fig. 4a, sowie des Brühprofils 2 gemäß Fig. 5a.

In den Figuren sind gleiche Elemente und Elemente mit der gleichen Funktion mit den gleichen Bezugszeichen gekennzeichnet.

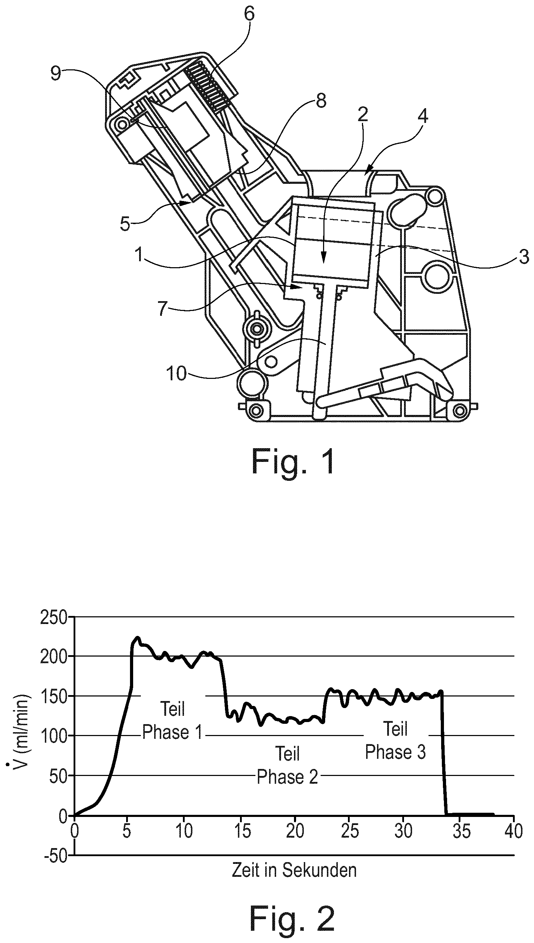

In Fig. 1 ist ein bevorzugtes Ausführungsbeispiel einer Brüheinheit einer erfindungsgemäßen Kaffeemaschine gezeigt. Zu erkennen ist eine in der Darstellung gemäß Fig. 1 (noch) offene Brühkammer 1, in der sich bereits Kaffeemehl 2 befindet, welches von einer nicht gezeigten Kaffeemühle der als Vollautomat ausgebildeten Kaffeemaschine stammt. Die Brühkammer 1 ist in einem Brühyzlinder 3 angeordnet, der zwischen der gezeigten Befüllposition und einer Brühposition mittels eines Antriebs in an sich bekannter Weise verstellbar ist. In der gezeigten Befüllposition wird das Kaffeemehl 2 über eine Einfüllöffnung 4 zugeführt.

In der Brühposition ist der Brühzylinder 3 in Richtung eines Brühkolbens 5 verstellt, der in der Brühposition axial in den Brühzylinder 3 hineinragt und somit die Brühkammer 1 verschließt. Der Brühzylinder 3 ist entgegen der Federkraft mehrerer Federn 6 verstellbar, und zwar durch Beaufschlagen der Brühkammer 1 mit Brühwasser aus Richtung eines Brühkammerbodens 7, welcher axial dem Brühkolben 5 in der Brühposition gegenüberliegt. Stirnseitig am Brühkolben 5 befindet sich ein Sieb 8 (Brühsieb), welches Kaffeemehl von einer Auslassleitung 9 zurückhält, in der ein nicht eingezeichnetes Cremaventil angeordnet ist und die zu einem nicht gezeigten Auslass führt. Erst nach Erreichen eines Mindestbrühwasserdrucks in der Brühkammer 1 öffnet das Cremaventil und Kaffee kann zum Auslass strömen. In dem gezeigten Ausführungsbeispiel beträgt dieser Mindestbrühwasserdruck 6,4 bar.

Die Brühwasserversorgung der Brühkammer 1 erfolgt in an sich bekannter Weise über eine aus Übersichtlichkeitsgründen nicht dargestellte Förderpumpe, die Brühwasser in einem ebenfalls nicht gezeigten Wasserpfad fördert, indem sowohl eine Heizeinrichtung zum Erwärmen des Wassers auf Brühtemperatur sowie ein Durchflussmesser (flow meter) angeordnet ist, welcher signalleitend mit einer Steuereinheit zum Ansteuern der Förderpumpe verbunden ist.

Zu erkennen ist in Fig. 1 weiter, dass bodenseitig der Brühkammer 1 ein Stempel 10 angeordnet ist, der aktiv mittels eines Antriebs in der Brühkammer 1, genauer dem Brühzylinder 3 verstellbar ist, um nach einer Kaffeebezugsphase bei ausgeschalteter Förderpumpe in dem sich benachbart zum Sieb 8 bildenden Filterkuchen (Tresterkuchen) auszupressen und in Richtung eines nicht gezeigten Tresterbehälters auszuwerfen.

Bei einer alternativen, nicht gezeigten Ausführungsvariante ist dem Brühkolben ein elektromotorischer Verstellantrieb zugeordnet, um den Brühkolben, insbesondere nach einem vorherigen Anpressen des Kaffeemehls in der Brühkammer zu verstellen und damit das Brühkammervolumen zu vergrößern - je nach Ausgestaltung des Verfahrens vor und/oder während der Beaufschlagung der Brühkammer mit Brühwasser.

Fig. 2 zeigt beispielhaft ein nach dem Konzept der Erfindung ausgebildetes Brühprofil in einem Brühwasservolumenstromdiagramm, bei dem der Brühwasservolumenstrom über die Zeit aufgetragen ist. Bis zu einer Zeit von hier beispielhaft etwa 5s dauert eine Durchfeuchtungsphase, in der der Brühwasservolumenstrom und damit die Brühwassergeschwindigkeit über die Zeit vergrößert wird. Dabei erfolgt eine vollständige Durchfeuchtung des Kaffeepulvers sowie ein Durchwirbelung.

Ab etwa 5 Sekunden bis etwa 33 Sekunden dauert eine unmittelbar auf die Befeuchtungsphase folgende Kaffeebezugsphase, in der Kaffee zum Auslass strömt. In dem konkreten Ausführungsbeispiel ist diese Kaffeebezugsphase unterteilt in drei unmittelbar aufeinanderfolgende Teilphasen von hier beispielhaft näherungsweise gleicher Länge (Dauer). Zu erkennen ist, dass sich die Teilphasen im Hinblick auf den mittleren Brühwasservolumenstrom, d.h. die Strömungsgeschwindigkeit, mit der das Brühwasser zur und durch die Brühkammer Richtung Auslass strömt unterscheiden. An die hier beispielhaft letzte (dritte) Teilphase schließt sich eine Auspressphase an, in der der Filterkuchen ausgepresst wird.

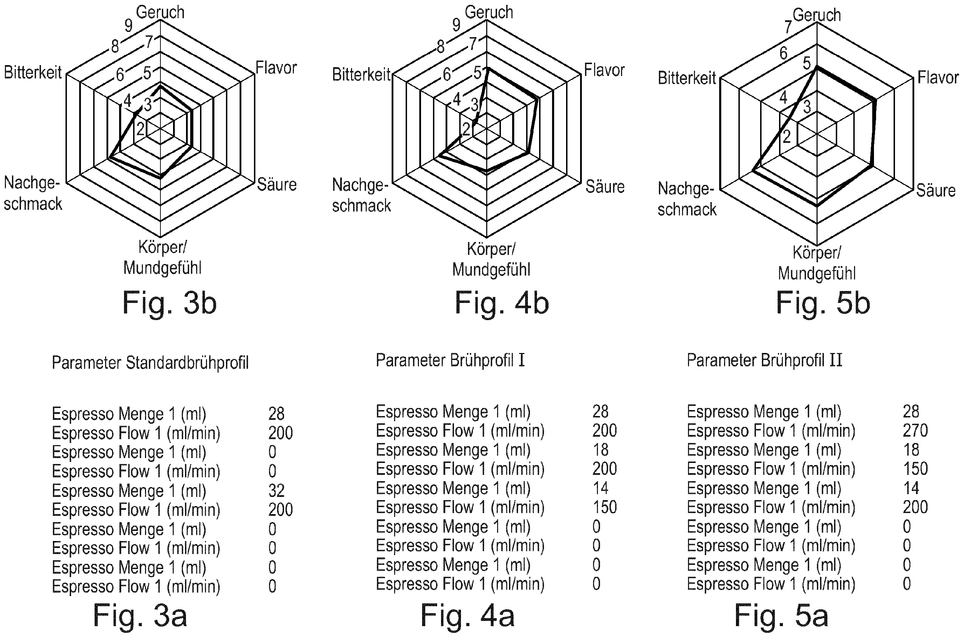

In den Fig. 4a und 5a sind unterschiedliche, jeweils nach dem Konzept der Erfindung ausgestaltete Brühprofile (Brühprofil 1) in Fig. 4a und Brühprofil 2 in Fig. 5a gezeigt. Aus der tabellarischen Darstellung ist zu erkennen, dass einzelne Teilphasen der Kaffeebezugsphase definiert sind durch die in dieser Teilphase zu fördernde Brühwassermenge (Menge 2, 3 usw.) sowie den teilphasenspezifischen Brühwasservolumenstrom (Flow 2, Flow 3 usw.).

Fig. 4 zeigt nun, wie erwähnt, ein mögliches Ausführungsbeispiel eines erfindungsgemäßen Brühprofils (Brühprofil 1). Dieses zeichnet sich aus durch eine Durchfeuchtungsphase. Diese ist durch einen Soll-Brühwasservolumenstrom von 200ml/min gekennzeichnet, der von der Förderpumpe zu fördern ist, bis eine Brühwassermenge von 28ml gefördert wurde. Während dieser Durchfeuchtungsphase bleibt bevorzugt das Cremaventil geschlossen. Auf diese Durchfeuchtungsphase folgt eine erste Teilphase einer Kaffeebezugsphase. In dieser wird die Förderpumpe auf Basis eines Soll-Brühwasservolumenstroms von 120ml/min angesteuert und zwar solange, bis von einem Durchflussmesser in Verbindung mit einer Steuerung erkannt wird, dass eine (weitere) Brühwassermenge von 18ml (bei vorgegebenem Volumenstrom bzw. Flow) gefördert wurde. Daraufhin beginnt unmittelbar die zweite Teilphase der Kaffeebezugsphase des ersten Brühprofils. Hier wird die Förderpumpe mit einer anderen Sollvorgabe, nämlich auf Basis eines Soll-Brühwasservolumenstroms von 150ml/min angesteuert, wobei die Förderpumpe auf Basis dieses Sollwertes betrieben wird, bis weitere 14ml Brühwasser gefördert wurden. Im Vergleich zu einem alternativen erfindungsgemäßen Brühprofil (Brühprofil II gemäß Fig. 5a) ist zu erkennen, dass dessen Durchfeuchtungsphase mit einem höheren Soll-Brühwasservolumenstrom von 270ml/min durchgeführt wird und zwar bis eine Brühwassermenge von 28ml gefördert wurde. Daraufhin beginnt ohne Pause die erste Teilphase der Kaffeebezugsphase, wobei hier die Förderpumpe auf Basis eines Soll-Brühwasservolumenstroms von 150ml/min angesteuert wird und zwar bis 18ml gefördert wurden. Daraufhin folgt die zweite Teilphase der Kaffeebezugsphase, in der die Förderpumpe auf Basis eines Soll-Brühwasservolumenstroms von 200ml/min angesteuert wird und zwar bis weitere 14ml Brühwasser gefördert wurden.

In Fig. 3a wurde versucht mittels der erfindungsgemäßen Software ein bekanntes Standardbrühprofil nachzustellen. Dieses zeichnet sich durch eine Durchfeuchtungsphase aus, in der die Förderpumpe auf Basis eines Soll-Brühwasservolumenstroms von 200ml/min betrieben wird und zwar bis 28ml Brühwasser gefördert wurden. Daraufhin folgt eine Vorbrühpause und die restliche Brühwassermenge von 32ml wird auf Basis der gleichen Soll-Brühwasservolumenstromvorgabe gefördert. Wie erläutert handelt es sich hierbei lediglich um eine Nachstellung eines Standardbrühprofils. In der Praxis bzw. bei bekannten Kaffeemaschinen wurde dieses Standardbrühprofil so angesteuert, dass die Förderpumpe bis zum Erreichen einer ersten vorgegebenen Menge, hier von 28ml, mit maximaler Drehzahl bzw. mit maximalem Brühwasservolumenstrom betrieben wurde, woraufhin dann eine Vorbrühpause erfolgt. Daraufhin wurde dann die gesamte Restbrühwassermenge wiederum mit maximaler Drehzahl, d.h. maximal möglichem Brühwasservolumenstrom gefördert.

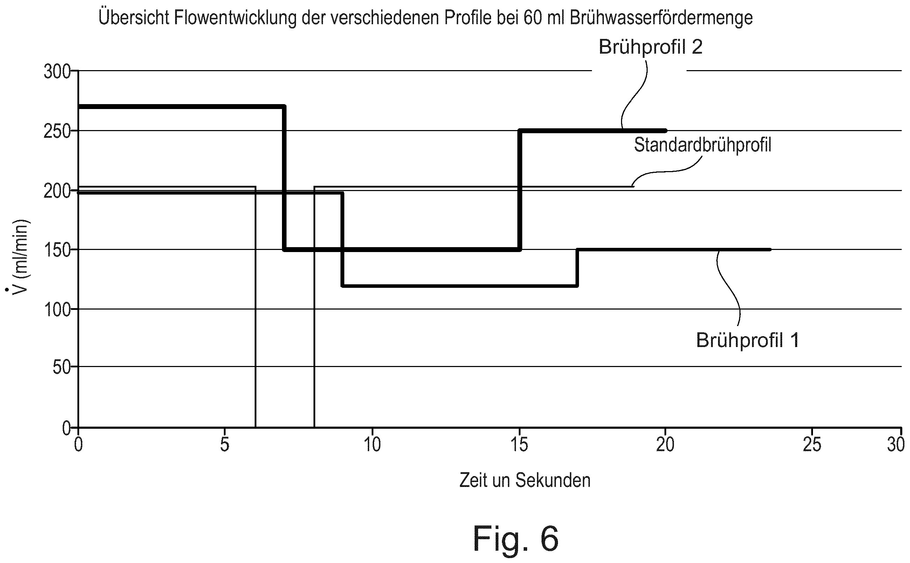

In Fig. 6 sind das "simulierte" Standardbrühprofil sowie die erfindungsgemäßen Brühprofile 1 und 2 graphisch aufgetragen; insbesondere ist der aus den Soll-Brühwasservolumenstromvorgaben resultierende Brühwasservolumenstrom (Flow) in ml/min über die Zeit in Sekunden aufgetragen. Zu erkennen ist, dass die unterschiedlichen Brühprofile eine unterschiedliche Zeitdauer beanspruchen,

Die Fig. 3b, 4b, 5b zeigen die zu den zugehörigen Brühprofilen 1, 2 gemäß Fig. 3a bzw. Fig. 4a bzw. Fig. 5a gehörigen sensorischen Auswertungen von resultierenden Kaffeeprodukten. Zu erkennen ist eine auffällige Spreizung der verschiedenen, dargestellten Sensorikparameter Geruch, Flavor (Geschmack), Säure, Körper/Mundgefühl, Nachgeschmack, Bitterkeit zwischen den aus den Brühprofilen 1 bzw. 2 resultierenden Kaffeegetränken.

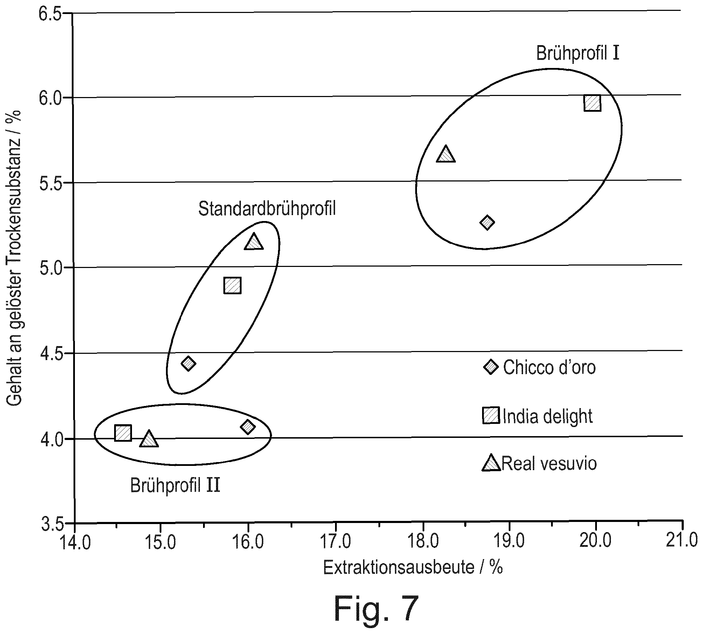

Fig. 7 verdeutlicht die Spreizung zwischen den unterschiedlichen Brühprofilen 1 und 2 gemäß Fig. 4a und 5a im Hinblick auf einen Vergleich des Gehaltes an gelöster Trockensubstanz zur Extraktionsausbeute in Prozent. Die Extraktionsausbeute eines Kaffees gibt dabei die Konzentration der aus dem Kaffeemehl (Kaffeepulver) gelösten Wirkstoffe an. Die Trockensubstanz ist jener Bestandteil des Kaffeetresters, der nach Abzug der Masse des enthaltenen Wassers übrig bleibt. Aus dem Diagramm ist zu erkennen, dass auch hinsichtlich der Extraktionsausbeute zwischen den Brühprofilen 1 und 2 eine große Spreizung erzielbar ist.

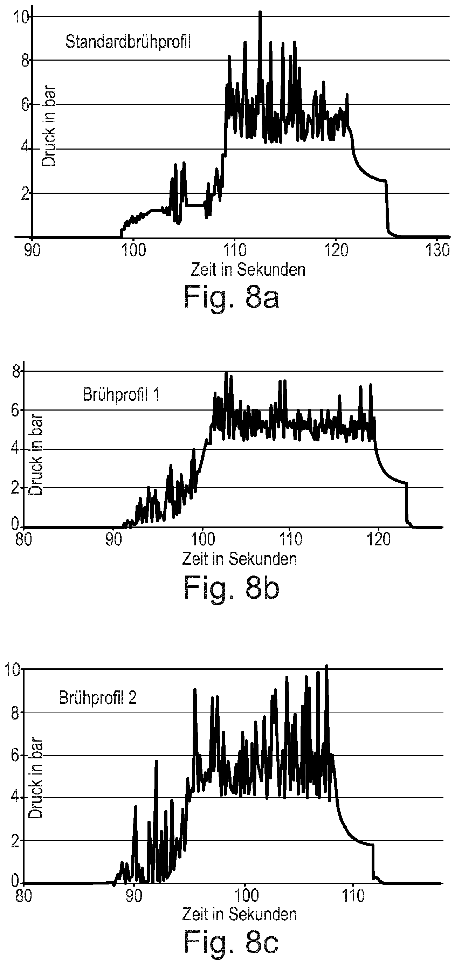

In den Fig. 8a bis 8c sind die aus den unterschiedlichen Brühprofilen (Standardprofil, Brühprofil 1 und Brühprofil 2) resultierenden Druckverläufe über die Zeit dargestellt. Zu erkennen ist bei den Brühprofilen 1 und 2 in den Darstellungen gemäß den Fig. 8b und 8c der langsamere Druckanstieg in der Durchfeuchtungsphase.

### Bezugszeichenliste

- 1: Brühkammer
- 2: Kaffeemehl
- 3: Brühzylinder
- 4: Einfüllöffnung
- 5: Brühkolben
- 6: Feder
- 7: Brühkammerboden
- 8: Sieb
- 9: Auslassleitung
- 10: Stempel

## Patentansprüche

1. Verfahren zum Betreiben einer Kaffeemaschine mit einer in einem Brühzylinder (3) ausgebildeten Brühkammer (1), die axial von einem in dem Brühzylinder (3) verschiebbar angeordneten Kolben begrenzt ist, wobei in einer Durchfeuchtungsphase das Kaffeemehl (2) durch Einleiten von Brühwasser in die Brühkammer (1) durchfeuchtet, und vorzugsweise verwirbelt, wird und in einer Kaffeebezugsphase Kaffee durch einen benachbart zu einem am Kolben angeordneten Sieb (8) aufgebauten Filterkuchen aus dem Kaffeemehl sowie durch das Sieb (8) hindurch in Richtung eines Auslasses strömt, und wobei zum Versorgen der Brühkammer (1) mit Brühwasser eine über eine Steuereinheit in Abhängigkeit eines Sensorsignals eines in einem Wasserpfad angeordneten Durchflussmessers ansteuerbare Förderpumpe vorgesehen ist, mit der Wasser über den Wasserpfad durch eine Heizeinrichtung hindurch in die Brühkammer (1) gefördert wird,wobei die Kaffeebezugsphase in mehrere Teilphasen unterteilt ist, in denen die Steuereinheit die Förderpumpe derart ansteuert, dass diese die Brühkammer (1) in mindestens zwei der Teilphasen mit Brühwasser in voneinander unterschiedlichen mittleren Brühwasservolumenströmen versorgt, **dadurch gekennzeichnet,**
**dass** der Steuereinheit Eingabemittel zugeordnet sind, mit denen zwischen mindestens zwei unterschiedlichen Brühprofilen auswählbar ist, die sich im Hinblick auf die Ausgestaltung von mindestens zwei der Teilphasen der jeweiligen Kaffeebezugsphase hinsichtlich der Größe des Brühwasservolumenstroms und/oder der Teilphasendauer und/oder hinsichtlich der in der Teilphase zu fördernden Brühwassermenge und/oder hinsichtlich ihrer Reihenfolge unterscheiden.

2. Verfahren nach Anspruch 1,
**dadurch gekennzeichnet,**
**dass** der Kolben durch Beaufschlagen der mit Kaffeemehl (2) gefüllten Brühkammer (1) mit Brühwasser über eine in die Brühkammer (1) einmündende Zuleitung entgegen der Federkraft mindestens einer Feder (6) unter Vergrößerung eines Brühkammervolumens verstellt wird oder dass der Kolben mittels eines Antriebs unter Vergrößerung eines Brühkammervolumens verstellt wird.

3. Verfahren nach einem der Ansprüche 1 oder 2,
**dadurch gekennzeichnet,**
**dass** sich die mittleren Brühwasservolumenströmen in mindestens zwei der Teilphasen der Kaffeebezugsphase um mindestens 10%, bevorzugt mindestens 20%, noch weiter bevorzugt mindestens 30%, ganz besonders bevorzugt mindestens 50% unterscheidet.

4. Verfahren nach einem der vorhergehenden Ansprüche,
**dadurch gekennzeichnet,**
**dass** die Kaffeebezugsphase ohne Brühwasserförderpause unmittelbar an die Durchfeuchtungsphase anschließt oder dass zwischen der Durchfeuchtungsphase und der Kaffeebezugsphase eine Brühwasserförderpause von kürzer als 1,5s, bevorzugt kürzer als 1,0s, noch weiter bevorzugt kürzer als 0,5s realisiert ist.

5. Verfahren nach einem der vorhergehenden Ansprüche,
**dadurch gekennzeichnet,**
**dass** die Förderpumpe während der Durchfeuchtungsphase derart von der Steuereinheit angesteuert wird, dass der Brühwasservolumenstrom während eines Zeitabschnitts der Durchfeuchtungsphase, bevorzugt linear oder exponentiell, zunimmt.

6. Verfahren nach einem der vorhergehenden Ansprüche,
**dadurch gekennzeichnet,**
**dass** aus der Brühkammer (1) erst Kaffee zum Auslass ab Erreichen eines Mindestbrühwasserdrucks in der Brühkammer (1), bevorzugt von über 4 bar, ganz besonders bevorzugt zwischen 5 bar und 10 bar, bevorzugt zwischen 5 bar und 8 bar strömt.

7. Verfahren nach Anspruch 6,
**dadurch gekennzeichnet,**
**dass** der Mindestbrühwasserdruck während der, bevorzugt am Ende der, Durchfeuchtungsphase oder alternativ während einer, bevorzugt zu Anfang oder in der Mitte der ersten Teilphase der Kaffeebezugsphase erreicht wird.

8. Verfahren nach einem der vorhergehenden Ansprüche,
**dadurch gekennzeichnet,**
**dass** Brühwasservolumenströme über ein Zeitintervall von zumindest 80%, bevorzugt von zumindest 90% einer jeweiligen Teilphase maximal +/- 20%, bevorzugt maximal +/- 10% um einen arithmetischen Mittelwert schwanken.

9. Verfahren nach einem der vorhergehenden Ansprüche,
**dadurch gekennzeichnet,**
**dass** die Förderpumpe derart angesteuert wird, dass sich die geförderte Brühwassermenge in mindestens zwei der Teilphasen mit unterschiedlichem mittlerem Brühwasservolumenstrom, bevorzugt um mindestens 20 %, noch weiter bevorzugt mindestens 30 %, unterscheiden.

10. Verfahren nach einem der vorhergehenden Ansprüche,
**dadurch gekennzeichnet,**
**dass** das Kaffeemehl (2) mittels des Kolbens vor Beginn der Durchfeuchtungsphase nicht gepresst wird oder maximal mit einem Druck von 6bar, bevorzugt von 5bar, weiter bevorzugt von 4bar, noch weiter bevorzugt von 2 bar beaufschlagt wird.

11. Verfahren nach einem der vorhergehenden Ansprüche,
**dadurch gekennzeichnet,**
**dass** an die Teilphasen der Kaffeebezugsphase eine Auspressphase anschließt, in der das Kaffeemehl (2) in der Brühkammer (1) mechanisch, bevorzugt durch Verstellen eines dem Kolben gegenüberliegenden Stempels (10) mittels eines Aktors ausgepresst wird.

12. Verfahren nach einem der vorhergehenden Ansprüche,
**dadurch gekennzeichnet,**
**dass** die Steuereinheit derart ausgebildet ist, dass softwaremäßig ein Soll-Brühwasservolumenstrom pro Teilphase und/oder eine Soll-Brühwasserfördermenge pro Teilphase einstellbar und/oder eine Soll-Teilphasenzeitdauer vorgebbar ist.

13. Verfahren nach einem der vorhergehenden Ansprüche,
**dadurch gekennzeichnet,**
**dass** die Teilphasen unmittelbar ohne Förderpause ineinander übergehen und/oder dass die Förderpumpe über die Dauer der Durchfeuchtungsphase und/oder der Kaffeebezugsphase durchgängig betrieben wird.

14. Kaffeemaschine, ausgebildet zur Durchführung eines Verfahrens nach einem der vorhergehenden Ansprüche, mit einer in einem Brühzylinder (3) ausgebildeten Brühkammer (1), die axial von einem in dem Brühzylinder (3) verschiebbar angeordneten Kolben begrenzt ist, wobei der Kolben bevorzugt durch Beaufschlagen der mit Kaffeemehl (2) befüllbaren Brühkammer (1) mit Brühwasser über eine in die Brühkammer (1) einmündende Zuleitung entgegen der Federkraft einer Feder (6), oder alternativ mittels eines Antriebs unter Vergrößerung eines Brühkammervolumens verstellbar ist, und wobei in einer Durchfeuchtungsphase das Kaffeemehl (2) durch Einleiten von Brühwasser in die Brühkammer (1) durchfeuchtbar und bevorzugt verwirbelbar ist, und in einer Kaffeebezugsphase Kaffee durch einen benachbart zu einem am Kolben angeordneten Sieb (8) aufgebauten Filterkuchen aus dem Kaffeemehl sowie durch das Sieb (8) hindurch in Richtung eines Auslasses strömt, und wobei zum Bereitstellen von Brühwasser eine über eine Steuereinheit in Abhängigkeit eines Sensorsignals eines in einem Wasserpfad angeordneten Durchflussmessers ansteuerbare Förderpumpe vorgesehen ist, mit der Wasser über den Wasserpfad durch eine Heizeinrichtung hindurch in die Brühkammer (1) förderbar ist,
wobei
die Steuereinheit die Förderpumpe derart ansteuernd ausgebildet ist, dass diese die Brühkammer (1) in mindestens zwei Teilphasen der mehrere Teilphasen umfassenden Kaffeebezugsphase mit Brühwasser in voneinander unterschiedlichen mittleren Brühwasservolumenströmen versorgt, **dadurch gekennzeichnet,**
**dass** der Steuereinheit Eingabemittel zugeordnet sind, welche derart ausgebildet sind, dass mit diesen zwischen mindestens zwei unterschiedlichen Brühprofilen auswählbar ist, die sich im Hinblick auf die Ausgestaltung von mindestens zwei der Teilphasen der jeweiligen Kaffeebezugsphase hinsichtlich der Größe des Brühwasservolumenstroms und/oder der Teilphasendauer und/oder hinsichtlich der in der Teilphase zu fördernden Brühwassermenge und/oder hinsichtlich ihrer Reihenfolge unterscheiden.

## Claims

1. A method for operating a coffee machine having a brewing chamber (1) which is formed in a brewing cylinder (3) and is axially limited by a piston displaceably disposed in the brewing cylinder (3), wherein in an imbruing phase, the coffee grounds (2) are imbrued, and preferably swirled, by feeding brewing water into the brewing chamber (1), and in a coffee drawing phase, coffee flows from the coffee grounds through a filter cake formed adjacent to a sieve (8) disposed at the piston from the coffee grounds and through the sieve (8) in direction of an outlet, and wherein for providing the brewing chamber (1) with brewing water, a feed pump is provided which is controllable via a control unit as a function of a sensor signal of a flow meter disposed in a water path and by means of which water is fed via the water path through a heating device to the brewing chamber (1), wherein the coffee drawing phase is divided into several sub-phases during which the control unit controls the feed pump in such a manner that the feed pump supplies the brewing chamber (1) with brewing water in average brewing-water volume flows, which differ from one another, in at least two of the sub-phases, **characterized in that**
input means are assigned to the control unit by means of which it is possible to select between at least two different brewing profiles which, with regard to the design of at least two of the sub-phases of the respective coffee drawing phase, differ with regard to the size of the brewing water volume flow and/or the sub-phase duration and/or with regard to the quantity of brewing water to be delivered in the sub-phase and/or with regard to their sequence.

2. The method according to claim 1,
**characterized in that**
the piston is displaced against the spring force of at least one spring (6) via a feed line opening into the brewing chamber (1) so as to enlarge a brewing chamber volume by brewing water being applied to the brewing chamber (1) filled with coffee grounds (2) or **in that** the piston is displaced by means of a drive so as to enlarge a brewing chamber volume.

3. The method according to claim 1 or 2,
**characterized in that**
the average brewing-water volume flows in at least two of the sub-phases of the coffee drawing phase differ by at least 10%, preferably by at least 20%, more preferably by 30%, particularly preferably by at least 50 %,.

4. The method according to any one of the preceding claims, **characterized in that**
the coffee drawing phase without the brewing-water conveying pause directly follows the imbruing phase or **in that** a brewing-water conveying pause of less than 1.5 s, preferably less than 1.0 s, even more preferably less than 0.5 s, takes place between the imbruing phase and the coffee drawing phase.

5. The method according to any one of the preceding claims, **characterized in that**
the feed pump is controlled in such a manner by the control unit during the imbruing phase that the brewing-water volume flow increases, preferably linearly or exponentially, during a period of the imbruing phase.

6. The method according to any one of the preceding claims, **characterized in that**
coffee for drawing does not flow from the brewing chamber (1) until a minimum brewing-water pressure of preferably over 4 bars, particularly preferably between 5 bars and 10 bars, preferably between 5 bars and 8 bars, has been reached in the brewing chamber (1).

7. The method according to claim 6,
**characterized in that**
the minimum brewing-water pressure is achieved during, preferably at the end of, the imbruing phase or alternatively during a, preferably at the beginning or in the middle of the, first sub-phase of the coffee drawing phase.

8. The method according to any one of the preceding claims, **characterized in that**
brewing-water volume flows fluctuate maximally ± 20 %, preferably maximally ± 10%, around an arithmetic average value over a time interval of at least 80 %, preferably of at least 90 %, of a corresponding sub-phase.

9. The method according to any one of the preceding claims, **characterized in that**
the feed pump is controlled in such a manner that the fed brewing water amount differs, preferably by at least 20 %, even more preferably by at least 30 %, in at least two of the sub-phases having a differing average brewing-water volume flow.

10. The method according to any one of the preceding claims, **characterized in that**
the coffee grounds (2) are not pressed by means of the piston before the imbruing phase has begun or are subjected to a pressure of no more than 6 bars, preferably 5 bars, more preferably 4 bars, even more preferably 2 bars.

11. The method according to any one of the preceding claims, **characterized in that**
the sub-phases of the coffee drawing phase are followed by a pressing phase during which the coffee grounds (2) in the brewing chamber (1) are mechanically pressed by means of an actuator, preferably by displacing a stamp (10) opposite the piston.

12. The method according to any one of the preceding claims, **characterized in that**
the control unit is realized in such a manner that a target brewing-water volume flow is settable in a software per sub-phase and/or a target brewing-water conveying amount is settable in a software per sub-phase and/or a target sub-phase duration is predeterminable in a software.

13. The method according to any one of the preceding claims, **characterized in that**
the sub-phases directly merge one into another without a feed pause and/or **in that** the feed pump is continuously operated for the duration of the imbruing phase and/or the coffee drawing phase.

14. A coffee machine, designed for implementing a method according to any one of the preceding claims, the coffee machine having a brewing chamber (1) which is formed in a brewing cylinder (3) and is axially limited by a piston displaceably disposed in the brewing cylinder (3), wherein the piston is displacable against the spring force of a spring (6) via a feed line opening into the brewing chamber (1) so as to enlarge a brewing chamber volume by brewing water being applied to the brewing chamber (1) filled with coffee grounds (2) or alternatively being displaced by means of a drive so as to enlarge a brewing chamber volume, wherein in an imbruing phase, the coffee grounds (2) are imbrued and preferably swirled by supplying brewing water into the brewing chamber (1), and wherein in a coffee drawing phase, coffee flows through a filter cake formed adjacent to a sieve (8) disposed at the piston from the coffee grounds and through the sieve (8) in direction of an outlet, and wherein for providing brewing water, a feed pump is provided which is controllable via a control unit as a function of a sensor signal of a flow meter disposed in a water path and by means of which water is supplied into the brewing chamber (1) via the water path through a heating device,
wherein
the control unit is designed to control the feed pump in such a manner that the feed pump supplies the brewing chamber (1) with brewing water in average brewing-water volume flows, which differ from one another, in at least two sub-phases of the coffee drawing phase which comprise a plurality of sub-phases, **characterized in that**
input means are assigned to the control unit by means of which it is possible to select between at least two different brewing profiles which, with regard to the design of at least two of the sub-phases of the respective coffee drawing phase, differ with regard to the size of the brewing water volume flow and/or the sub-phase duration and/or with regard to the quantity of brewing water to be delivered in the sub-phase and/or with regard to their sequence.

## Revendications

1. Procédé pour l'opération d'une machine à café ayant une chambre de percolation (1) qui est formée dans un cylindre de percolation (3) et qui est limitée axialement par un piston disposé de manière déplaçable dans le cylindre de percolation (3), le café moulu (2) étant mouillé, et de préférence tourbillonné, pendant une étape de mouillage en alimentant la chambre de percolation (1) en eau de percolation et le café écoulant du café moulu vers une sortie à travers un gâteau de filtration formé à être adjacent à une passoire (8) disposée sur le piston et à travers la passoire (8) pendant une étape d'obtention de café, une pompe d'alimentation étant prévue qui sert à alimenter la chambre de percolation (1) en eau de percolation et qui peut être contrôlée par une unité de contrôle en fonction d'un signal de capteur d'un débitmètre disposé dans la voie d'eau et au moyen de laquelle de l'eau est refoulé à la chambre de percolation (1) par la voie d'eau par un appareil de chauffage, l'étape d'obtention de café étant divisée en plusieurs sous-étapes pendant lesquelles l'unité de contrôle contrôle la pompe d'alimentation de telle manière que la pompe d'alimentation alimente la chambre de percolation (1) en eau de percolation en moyens débits de l'eau de percolation pendant au moins deux des sous-étapes, **caractérisé en ce que**
l'unité de contrôle est associée à des éléments de saisie au moyen desquels on peut choisir entre au moins deux profils de percolation différents qui diffèrent d'au moins deux sous-étapes de l'étapes d'obtention de café correspondant en ce qui concerne la réalisation concernant la taille du débit de l'eau de percolation et/ou la durée de sous-étape et/ou concernant la quantité d'eau de percolation à être alimentée pendant la sous-étape et/ou concernant leur séquence.

2. Procédé selon la revendication 1,
**caractérisé en ce que**
le piston est déplacé contre la force d'au moins un ressort (6) par une conduite d'alimentation s'ouvrant dans la chambre de percolation (1) afin d'élargir un volume de chambre de percolation en appliquant l'eau de percolation à la chambre de percolation (1) remplie de café moulu (2) ou **en ce que** le piston est déplacé au moyen d'un entraînement afin d'élargir un volume de chambre de percolation.

3. Procédé selon la revendication 1 ou 2,
**caractérisé en ce que**
les moyens débits d'eau de percolation diffèrent au moins 10 %, de préférence au moins 20 %, de préférence particulière au moins 30 %, de préférence toute particulière au moins 50 %, pendant au moins deux des sous-étapes de l'étape d'obtention de café.

4. Procédé selon l'une quelconque des revendications précédentes, **caractérisé en ce que**
l'étape d'obtention de café sans la pause d'alimentation en eau de percolation suit directement l'étape de mouillage ou **en ce qu'**une pause d'alimentation en eau de percolation de moins de 1,5 s, de préférence moins de 1,0 s, de préférence toute particulière moins de 0,5 s, se passe entre l'étape de mouillage et l'étape d'obtention de café.

5. Procédé selon l'une quelconque des revendications précédentes, **caractérisé en ce que**
la pompe d'alimentation est contrôlée par l'unité de contrôle pendant l'étape de mouillage de telle manière que le débit d'eau de percolation augmente, de préférence linéairement ou exponentiellement, pendant une période de l'étape de mouillage.

6. Procédé selon l'une quelconque des revendications précédentes, **caractérisé en ce que**
du café pour l'obtention n'écoule pas de la chambre de percolation (1) jusqu'à une pression minimum de l'eau de percolation de préférence de plus de 4 bars, de préférence particulière entre 5 bars et 10 bars, de préférence entre 5 bars et 8 bars, a été atteinte dans la chambre de percolation (1).

7. Procédé selon la revendication 6,
**caractérisé en ce que**
la pression minimum de l'eau de percolation est atteinte pendant, de préférence au fin de, l'étape de mouillage ou alternativement pendant une, de préférence au début ou dans le centre de la, première sous-étape de l'étape d'obtention de café.

8. Procédé selon l'une quelconque des revendications précédentes, **caractérisé en ce que**
des débits d'eau de percolation fluctuent maximalement ± 20 %, de préférence maximalement ± 10 %, autour une valeur moyenne arithmétique pendant une intervalle de temps d'au moins 80 %, de préférence d'au moins 90 %, d'une sous-étape correspondante.

9. Procédé selon l'une quelconque des revendications précédentes, **caractérisé en ce que**
la pompe d'alimentation est contrôlée de telle manière que la quantité alimentée de l'eau de percolation diffère, de préférence d'au moins 20 %, de préférence toute particulière d'au moins 30 %, pendant au moins deux des sous-étapes ayant un moyen débit d'eau de percolation différent.

10. Procédé selon l'une quelconque des revendications précédentes, **caractérisé en ce que**
le café moulu (2) n'est pas comprimé au moyen du piston avant que l'étape de mouillage a commencée ou est soumis à une pression pas plus de 6 bars, de préférence de 5 bars, de préférence particulière de 4 bars, de préférence toute particulière de 2 bars.

11. Procédé selon l'une quelconque des revendications précédentes, **caractérisé en ce que**
les sous-étapes de l'étape d'obtention de café sont suites par une étape de pression pendant laquelle le café moulu (2) dans la chambre de percolation (1) est comprimé mécaniquement, de préférence en déplaçant une étampe (10) vis-à-vis au piston, au moyen d'un actionneur.

12. Procédé selon l'une quelconque des revendications précédentes, **caractérisé en ce que**
l'unité de contrôle est réalisée de telle manière qu'un débit cible d'eau de percolation peut être ajusté dans un software par sous-étape et/ou une quantité d'alimentation cible en eau de percolation peut être ajustée dans un software par sous-étape et/ou une durée de sous-étape cible peut être prédéterminée dans software.

13. Procédé selon l'une quelconque des revendications précédentes, **caractérisé en ce que**
les sous-étapes converge directement l'une en l'autre sans une pause d'alimentation et/ou **en ce que** la pompe d'alimentation est opérée continument pour la durée de l'étape de mouillage et/ou de l'étape d'obtention de café.

14. Machine à café, conçue pour l'implémentation d'un procédé selon l'une quelconque des revendications précédentes, la machine à café ayant une chambre de percolation (1) qui est formée dans un cylindre de percolation (3) et qui est limitée axialement par un piston disposé de manière déplaçable dans le cylindre de percolation (3), le piston étant déplaçable contre la force d'un ressort (6) par une conduite d'alimentation s'ouvrant dans la chambre de percolation (1) afin d'élargir une volume de chambre de percolation en appliquant l'eau de percolation à la chambre de percolation (1) remplie du café moulu (2) ou alternativement le piston étant déplacé au moyen d'un entraînement afin d'élargir une volume de chambre de percolation, le café moulu (2) étant mouillé, et de préférence tourbillonné, pendant une étape de mouillage en alimentant la chambre de percolation (1) en l'eau de percolation, et café écoulant vers une sortie du café moulu à travers un gâteau de filtration formé d'être adjacent à une passoire (8) disposée sur le piston et par une passoire (8) pendant une étape d'obtention de café, une pompe d'alimentation étant prévue pour alimenter en l'eau de percolation, la pompe d'alimentation pouvant être contrôlée par une unité de contrôle en fonction d'un signal de capteur d'un débitmetre disposé dans une voie d'eau et alimentant la chambre de percolation (1) en l'eau par la voie d'eau à travers un dispositif de chauffage,
dans laquelle
l'unité de contrôle est conçue à contrôler la pompe d'alimentation de telle manière que la pompe d'alimentation alimente la chambre de percolation (1) en l'eau de percolation dans des moyennes débits d'eau de percolation différents pendant au moins deux sous-étapes de l'étape d'obtention de café comprenant plusieurs sous-étapes, **caractérisé en ce que**
l'unité de contrôle est associée à des éléments de saisir qui sont réalisés de telle manière qu'au moins deux profils de percolation différents peuvent être choisis en utilisant ces éléments de saisir, les profils de percolation se différant en ce qui concerne la réalisation concernant la taille du débit de l'eau de percolation et/ou la durée de sous-étape et/ou concernant la quantité d'eau de percolation à être alimentée pendant la sous-étape et/ou concernant leur séquence.
